# EUROPÄISCHE PATENTANMELDUNG

(11) **EP 1 211 438 A2**
(43) Veröffentlichungstag der Anmeldung: **05.06.2002**
(21) Anmeldenummer: 01124307.8
(22) Anmeldetag: 19.10.2001
(51) Int. Cl.: F16H 45/02

(54) **Hydrodynamischer Drehmomentwandler**

(30) Priorität: 29.11.2000 DE 10059343; 05.07.2001 DE 10132065
(71) Anmelder: Ford-Werke Aktiengesellschaft, 50735 Köln (DE); Thyssen Krupp Automotive AG, 44793 Bochum (DE)
(72) Erfinder: Bornschier, Bernd, Dipl.-Ing., 58332 Schwelm (DE); Sengpiel, Michael, Dipl.-Ing., 42115 Wuppertal (DE); Premiski, Vladimir, 33950 Lege Cap Ferret (FR)
(74) Vertreter: Bonsmann, Manfred, Dipl.-Ing.

(57) **Zusammenfassung**

Die Erfindung betrifft einen hydrodynamischen Drehmomentwandler, welcher ein von einem Motor in Drehung versetztes Wandlergehäuse (50) mit einem Pumpenrad (51) aufweist. Durch einen Ölkreislauf wird über ein Leitrad (52) ein drehfest mit einer Welle (61) verbundenes Turbinenrad (53) hydrodynamisch mit dem Pumpenrad (51) gekoppelt. Das Turbinenrad (53) ist axial verschiebebeweglich auf der Welle (61) gelagert. An seiner Außenschale ist vorzugsweise eine Reibfläche (54) angeordnet, die bei einer axialen Verschiebung des Turbinenrades (53) mit einer Reibfläche (55) am Wandlergehäuse in Kontakt kommt und hierdurch eine Überbrückungskupplung erzeugt. Das Turbinenrad (53) ist ferner über Federn (59) mit einem drehfest auf der Welle angeordneten Kopplungselement (60) verbunden. Bei einer alternativen Ausgestaltung ist das Turbinenrad drehfest auf der Welle angeordnet, und die Überbrückungskupplung erfolgt über Reibflächen an einem Kopplungselement und an dem Wandlergehäuse, wobei zwischen Kopplungselement und Turbinenrad ein Torsionsdämpfer vorgesehen ist.

## Beschreibung

Die Erfindung betrifft einen hydrodynamischen Drehmomentwandler, enthaltend
a) ein um eine Welle drehbares Wandlergehäuse, das mit einem Antrieb und mit einem Pumpenrad verbunden ist,
b) ein relativ zum Wandlergehäuse drehbar gelagertes Turbinenrad, das mit der Welle und hydrodynamisch mit dem Pumpenrad gekoppelt ist,
c) eine Überbrückungskupplung zur Herstellung einer Reibungskopplung zwischen einer mit dem Wandlergehäuse in Verbindung stehenden Reibfläche und einer mit dem Turbinenrad in Verbindung stehenden Reibfläche.

Hydrodynamische Drehmomentwandler werden insbesondere in Kraftfahrzeugen eingesetzt, um das von einem Verbrennungsmotor gelieferte Drehmoment über eine Welle an ein Getriebe oder an die Räder weiterzuleiten. Ein typischer Drehmomentwandler wird zum Beispiel in der WO 93/13338 beschrieben. Dieser enthält ein um eine Welle drehbar gelagertes Wandlergehäuse, welches mit einem vom Verbrennungsmotor kommenden Antrieb verbunden ist und in seinem Inneren ein fest mit dem Wandlergehäuse verbundenes Pumpenrad aufweist. Ferner enthält der Drehmomentwandler ein relativ zum Wandlergehäuse drehbar auf der Welle gelagertes Turbinenrad, sowie ein zwischen Turbinenrad und Pumpenrad gelegenes Leitrad. Bei einer Drehung des Wandlergehäuses durch den Antrieb wird im Wandler ein hydrodynamischer Druck in der Ölfüllung aufgebaut, und es kommt zu einer Kreislaufströmung des Öles über Pumpenrad, Leitrad und Turbinenrad. Durch eine entsprechende Formgebung der Schaufeln dieser Räder und eine Freilauflagerung des Leitrades wird dabei erreicht, dass beim Anfahren eine Drehmomentverstärkung eintritt. Ferner wird durch die hydrodynamische Kopplung zwischen Antrieb und Welle ein weiches Anfahren ohne Kupplung ermöglicht, und Drehmomentschwankungen des Verbrennungsmotors werden gedämpft.

Der Drehmomentwandler gemäß der WO 93/13338 enthält ferner eine Überbrückungskupplung. Wenn das Wandlergehäuse mit dem Pumpenrad und das hierdurch angetriebene Turbinenrad mit der Welle etwa gleiche Drehzahl erreicht haben, kann die Überbrückungskupplung geschlossen werden, um eine kraftschlüssige mechanische Kopplung zwischen Wandlergehäuse und Welle herzustellen. Auf diese Weise wird im sogenannten Kupplungsbereich, in dem Antrieb und Welle etwa gleiche Drehzahl haben, die mit einem Energieverlust behaftete hydrodynamische Kopplung durch eine mechanische Kopplung ersetzt. Die Überbrückungskupplung wird dabei durch eine oder mehrere Reibflächen mit zugehörigen Gegenflächen realisiert, von denen die eine mit dem Wandlergehäuse und die andere mit dem Turbinenrad in Verbindung steht. Zum Einschalten der Überbrückungskupplung werden die beiden Reibflächen, welche sich axial beabstandet gegenüberstehen, miteinander in Kontakt gebracht, um dadurch das Wandlergehäuse mit dem Turbinenrad zu koppeln.

Konstruktiv wird die Überbrückungskupplung bei einem Drehmomentwandler gemäß der WO 93/13338 dadurch verwirklicht, dass ein scheibenförmiger sogenannter Kolben vorgesehen ist, welcher axial verschiebebeweglich auf der Welle gelagert und drehfest mit dem Wandlergehäuse verbunden ist, und welcher mit einer an ihm ausgebildeten ersten Reibfläche einer zweiten Reibfläche am Wandlergehäuse gegenübersteht. Zwischen diesen beiden Reibflächen befindet sich ein Kopplungselement, das über einen Torsionsdämpfer mit dem Turbinenrad in Verbindung steht. Im geöffneten Zustand der Überbrückungskupplung sind die Reibflächen an Kolben und Wandlergehäuse einerseits und am Kopplungselement andererseits voneinander beabstandet, so dass keine Kopplung stattfindet. Im geschlossenen Zustand der Überbrückungskupplung ist der Kolben axial in Richtung auf den motorseitigen Wandlerdeckel zu verschoben und klemmt hierdurch das zwischen ihm und dem Wandlergehäuse gelegene Kopplungselement ein. Hierdurch kommen die entsprechenden Reibflächen in Kontakt, so dass über das Kopplungselement eine kraftschlüssige Reibungskopplung zwischen dem Wandlergehäuse und dem Turbinenrad entsteht.

Wie bereits erwähnt, ist das Kopplungselement bei dem Drehmomentwandler gemäß der WO 93/13338 über einen Torsionsdämpfer an das Turbinenrad gekoppelt. Dieser Torsionsdämpfer besteht aus in Umfangsrichtung verlaufenden, an der Außenschale des Turbinenrades gelagerten Spiralfedern, deren eines Ende sich am Turbinenrad und deren anderes Ende sich am Kopplungselement abstützt. Die Federn sind somit in den Weg des Kraftflusses vom Kopplungselement zum Turbinenrad seriell eingeschaltet und bewirken, dass Drehmomentspitzen und Drehmomentschwankungen, die vom Antrieb beziehungsweise Wandlergehäuse kommen, bei ihrer Weiterleitung an das Turbinenrad beziehungsweise an die Welle gedämpft und ausgeglichen werden.

Ausgehend von diesem Stand der Technik war es Aufgabe der vorliegenden Erfindung, die Konstruktion eines Drehmomentwandlers mit Überbrückungskupplung derart zu vereinfachen, dass eine kompaktere Bauweise, verringerte Herstellungskosten und eine geringere Fehleranfälligkeit resultieren.

Diese Aufgabe wird durch einen hydrodynamischen Drehmomentwandler mit den Merkmalen des Anspruchs 1 gelöst. Vorteilhafte Ausgestaltungen sind in den Unteransprüchen enthalten.

Der hydrodynamische Drehmomentwandler enthält demnach
a) ein um eine Welle drehbares Wandlergehäuse, das mit einem vom Verbrennungsmotor kommenden Antrieb und mit einem Pumpenrad verbunden ist,
b) ein relativ zum Wandlergehäuse drehbar gelagertes Turbinenrad, das mit der Welle mechanisch sowie mit dem Pumpenrad hydrodynamisch gekoppelt ist,
c) eine Überbrückungskupplung, mit welcher eine Reibungskopplung zwischen einer oder mehreren Reibflächen mit zugehörigen Gegenflächen hergestellt werden kann, wobei eine der Reibflächen mit dem Wandlergehäuse und eine andere der Reibflächen mit dem Turbinenrad in Verbindung steht.

Durch den Drehmomentwandler wird ein vom Antrieb kommendes Eingangsdrehmoment über das Wandlergehäuse beziehungsweise das Pumpenrad hydrodynamisch auf das Turbinenrad übertragen, welches das Drehmoment umgewandelt über die Welle am Ausgang abgibt. Mit Hilfe der Überbrückungskupplung kann parallel beziehungsweise alternativ zur hydrodynamischen Kopplung eine mechanische Kopplung zwischen Wandlergehäuse und Turbinenrad hergestellt werden, wenn die entsprechenden Reibflächen miteinander in Kontakt gebracht werden.

Der hydrodynamische Drehmomentwandler ist dadurch gekennzeichnet, dass das Turbinenrad axial verschiebebeweglich auf der Welle gelagert ist, so dass sich durch eine axiale Verschiebung des Turbinenrades die genannten Reibflächen, die mit dem Turbinenrad beziehungsweise mit dem Wandlergehäuse in Verbindung stehen, in Kontakt gebracht werden können.

Die Herstellung des Kontaktes zwischen den Reibflächen und damit das Schließen der Überbrückungskupplung wird erfindungsgemäß durch eine axiale Verschiebung des Turbinenrades erreicht. Es ist demnach nicht erforderlich, ein zusätzliches Element axial verschiebbar zu lagern, was den konstruktiven Aufwand und damit die Herstellungskosten des Drehmomentwandlers verringert, eine potentielle Verschleißstelle vermeidet und eine kompaktere Bauweise des Drehmomentwandlers ermöglicht.

Die durch die axiale Verschiebung des Turbinenrades eventuell eintretende verschlechterte hydrodynamische Kopplung zwischen Pumpenrad und Turbinenrad hat dabei keine Nachteile für das Übertragungsverhalten des Drehmomentwandlers zur Folge, da bei geschlossener Überbrückungskupplung die hydrodynamische Kopplung ohnehin nicht genutzt wird.

Gemäß einer Weiterbildung der Erfindung enthält der hydrodynamische Drehmomentwandler einen Torsionsdämpfer, welcher die Drehmomentübertragung zwischen dem Antrieb und der Welle dämpft. Hierdurch können Drehmomentspitzen und -stöße sowie Schwankungen im Drehmoment, das vom Motor bereitgestellt wird, ausgeglichen werden, und es kann eine geglättete Drehmomentabgabe erfolgen.

Bei einer ersten Ausgestaltung ist der Torsionsdämpfer dabei in der kraftübertragenden Verbindung zwischen dem Turbinenrad und der zugehörigen Reibfläche der Überbrückungskupplung angeordnet. Das heißt, dass der Torsionsdämpfer das bei geschlossener Überbrückungskupplung an die genannte Reibfläche übertragene Drehmoment vor seiner Weiterleitung an das Turbinenrad dämpft. Hierdurch wird sowohl ein weicheres Einschalten der Überbrückungskupplung als auch ein Abfangen von Drehmomentspitzen und Schwankungen im Zustand mit eingeschalteter Überbrückungskupplung erreicht. Bei geöffneter Überbrückungskupplung ist der Torsionsdämpfer dagegen außer Betrieb, so dass das vom Pumpenrad auf das Turbinenrad hydrodynamisch übertragene Drehmoment unverändert zur Welle weitergeleitet wird.

Gemäß einer anderen Ausgestaltung ist der Torsionsdämpfer in der Verbindung zwischen dem Turbinenrad einerseits und der Welle andererseits angeordnet. In dieser Position dämpft er die Drehmomentübertragung vom Turbinenrad auf die Welle unabhängig davon, ob das Drehmoment hydrodynamisch vom Pumpenrad oder durch das Schließen der Überbrückungskupplung auf das Turbinenrad übertragen wurde. Durch einen derart angeordneten Torsionsdämpfer kann somit eine allgemeine Drehmomentglättung vor der Ausgabe des Drehmoments über die Welle erreicht werden.

Die Realisierung des Torsionsdämpfers erfolgt vorzugsweise über mindestens eine an der Außenschale des Turbinenrades gelagerte, umfänglich verlaufende Feder, deren eines Ende an dem Turbinenrad und deren anderes Ende an einem relativ zum Turbinenrad drehbaren Kopplungselement abgestützt ist. Vorzugsweise sind mehrere derartige Federn vorhanden, welche symmetrisch über den Umfang des Turbinenrades verteilt sind. Die Federn liegen durch ihre Abstützung seriell im Kraftübertragungsweg zwischen Kopplungselement und Turbinenrad, so dass sie dort durch ihre Elastizität die Glättung des Drehmoments bewirken können. Die relative Drehbewegung zwischen dem Kopplungselement und dem Turbinenrad kann ferner durch Reibung entsprechend dem gewünschten Übertragungsverhalten gedämpft sein.

Bei der zuletzt erläuterten Konstruktion des Torsionsdämpfers weist das Kopplungselement vorzugsweise mindestens ein umfänglich verlaufendes Langloch auf, durch welches ein von der Außenschale des Turbinenrades axial abstehender Zapfen greift. Durch die Kombination von Langloch und Zapfen wird eine relative Drehung zwischen Turbinenrad und Kopplungselement ermöglicht, die jedoch durch die beiden Enden des Langloches und den daran anschlagenden Zapfen begrenzt ist.

Der Durchtritt des genannten Zapfens durch das Langloch ist vorzugsweise abgedichtet, so dass ein Druckmedium mit auf beiden Seiten des Kopplungselementes unterschiedlichem Druck vorgesehen werden kann. Eine besonders einfache Art der Abdichtung kann dadurch erreicht werden, dass das Koppelelement flächig und damit abgedichtet auf der Außenseite des Turbinenrades aufliegt. Die Dichtheit der aneinander liegenden Flächen wird in erster Linie erreicht durch Spannfedern oder sonstige Spannelemente, die auf dem Zapfen fixiert sind und eine vorgegebene Spannkraft auf die Gegenseite des Koppelelements aufbringen. Ferner kann vorzugsweise im Eingriffsbereich des Zapfens in das Langloch eine einstellbare Reibung zwischen Kopplungselement und Turbinenrad ausgebildet sein, mit deren Hilfe sich ein gewünschtes Dämpfungsverhalten im Übertragungsweg zwischen Kopplungselement und Turbinenrad einstellen lässt.

Gemäß einer bevorzugten Ausgestaltung des Drehmomentwandlers ist die mit dem Turbinenrad in Verbindung stehende Reibfläche am oben genannten Kopplungselement ausgebildet. Bei dieser Konstruktion ist bei geschlossener Überbrückungskupplung das Kopplungselement drehfest über die Reibfläche mit dem Wandlergehäuse verbunden, und die Übertragung des Drehmoments vom Kopplungselement auf das Turbinenrad wird durch den zwischengeschalteten Torsionsdämpfer geglättet.

Gemäß einer anderen Ausgestaltung des Drehmomentwandlers ist die mit dem Turbinenrad in Verbindung stehende Reibfläche an der Außenschale des Turbinenrades ausgebildet. Das heißt, dass das Turbinenrad unmittelbar über diese Reibfläche einen Reibkontakt zum Wandlergehäuse herstellen kann, ohne dass dazwischen gelegene Elemente notwendig wäre. Diese Herstellung des Reibkontaktes zwischen Turbinenrad und Wandlergehäuse wird dadurch möglich, dass das Turbinenrad axial verschiebebeweglich gelagert ist.

Mindestens eine der an der Überbrückungskupplung beteiligten Reibflächen, welche mit dem Turbinenrad beziehungsweise dem Wandlergehäuse in Verbindung stehen, kann aus einer Aluminiumgusslegierung hergestellt sein. Das Material kann mit verschiedenen Legierungsbestandteilen veredelt werden. Vorzugsweise ist die mit dem Turbinenrad in Verbindung stehende Reibfläche aus dem genannten Material hergestellt, da auch das Turbinenrad vorzugsweise aus einer Aluminiumgusslegierung besteht. Das Turbinenrad wird vorzugsweise im Vakuum-Druck-Gießverfahren hergestellt.

Alternativ können jedoch auch das Turbinenrad und/oder das Wandlergehäuse aus anderen Gussmaterialien oder auch aus Kunststoff hergestellt sein.

Weiterhin kann mindestens eine der Reibflächen der Überbrückungskupplung aus Stahl hergestellt sein. Insbesondere hat die Kombination einer aus Stahl und einer aus Aluminiumlegierung bestehenden Reibfläche vorteilhafte Gleiteigenschaften.

Weiterhin kann mindestens eine der Reibflächen Ölflusskanäle aufweisen, durch welche bei geschlossener beziehungsweise sich schließender Überbrückungskupplung das im Innenraum des Drehmomentwandlers befindliche Druckmedium strömen kann. Diese Strömung kann den entstehenden Reibkontakt zwischen den Reibflächen positiv beeinflussen und zudem Reibungswärme von den Reibflächen abführen.

Gemäß einer bevorzugten Weiterbildung der Erfindung sind im Drehmomentwandler Kanäle für ein Druckmedium derart vorgesehen, dass über eine entsprechende Zuleitung des Druckmediums über diese Kanäle die beiden in verschiedene axiale Richtungen weisenden Seiten des Turbinenrades (Vorderseite und Rückseite) wahlweise mit einer Druckdifferenz beaufschlagt werden können. Über eine derartige Druckdifferenz lässt sich eine in axialer Richtung wirkende Kraft auf das Turbinenrad ausüben, durch welche die axiale Verschiebebewegung des Turbinenrades vorgenommen werden kann. Durch eine entsprechende Zuleitung von Druckmedium zur Vorder- beziehungsweise Rückseite des Turbinenrades kann somit die axiale Position des Turbinenrades und damit das Schließen der Überbrückungskupplung gesteuert werden.

Gemäß einer weiteren vorteilhaften Ausgestaltung der Erfindung kann an dem Turbinenrad wenigstens eine Kolbeneinrichtung angeordnet sein, mittels derer eine Reibungskopplung zwischen Turbinenrad und Wandlergehäuse hergestellt werden kann. Zur Herstellung einer Reibungskopplung wird mittels der Kolbeneinrichtung zunächst ein Teil des Drehmomentes zwischen Turbinenrad und Wandlergehäuse übertragen, um dadurch die axiale Verschiebebewegung des Turbinenrades zur endgültigen Herstellung der Reibungskopplung zu erleichtern.

Im Folgenden wird die Erfindung mit Hilfe der Figuren beispielhaft erläutert. Es zeigen:
- Fig. 1: eine Explosionsansicht von Teilen einer ersten Ausführungsform des Drehmomentwandlers in perspektivischer Ansicht von vorne;
- Fig. 2: die Explosionsansicht gemäß Figur 1 von hinten;
- Fig. 3: einen Querschnitt durch den zusammengesetzten Drehmomentwandler nach den Figuren 1 und 2;
- Fig. 4: eine Seitenansicht und eine Frontansicht einer zweiten Ausführungsform des Drehmomentwandlers;
- Fig. 5: einen Querschnitt entlang der Linie B-B von Figur 4;
- Fig. 6: einen Querschnitt entlang der Linie A-A von Figur 4;
- Fig. 7: eine Explosionsansicht einer dritten Ausführungsform des Drehmomentwandlers perspektivisch von vorne;
- Fig. 8: die Explosionsansicht gemäß Figur 7 von hinten;
- Fig. 9: einen Querschnitt durch den zusammengesetzten Drehmomentwandler nach den Figuren 7 und 8;
- Fig. 10: eine Aufsicht auf das Kopplungselement des Drehmomentwandlers der Figuren 7 bis 9;
- Fig. 11: einen Querschnitt durch eine vierte Ausführungsform des Drehmomentwandlers, bei welcher die Außenschale des Turbinenrades direkt in Reibkontakt mit dem Wandlergehäuse tritt;
- Fig. 12: eine Abwandlung der Ausführungsform nach Figur 11; und
- Fig. 13: eine schematische Ansicht einer weiteren Ausführungsform des erfindungsgemäßen Drehmomentwandlers.

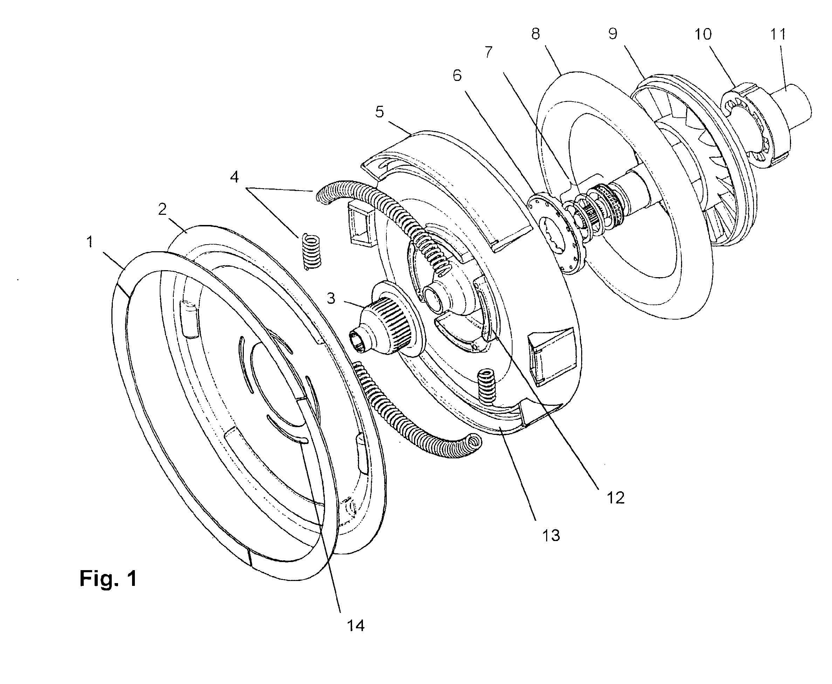

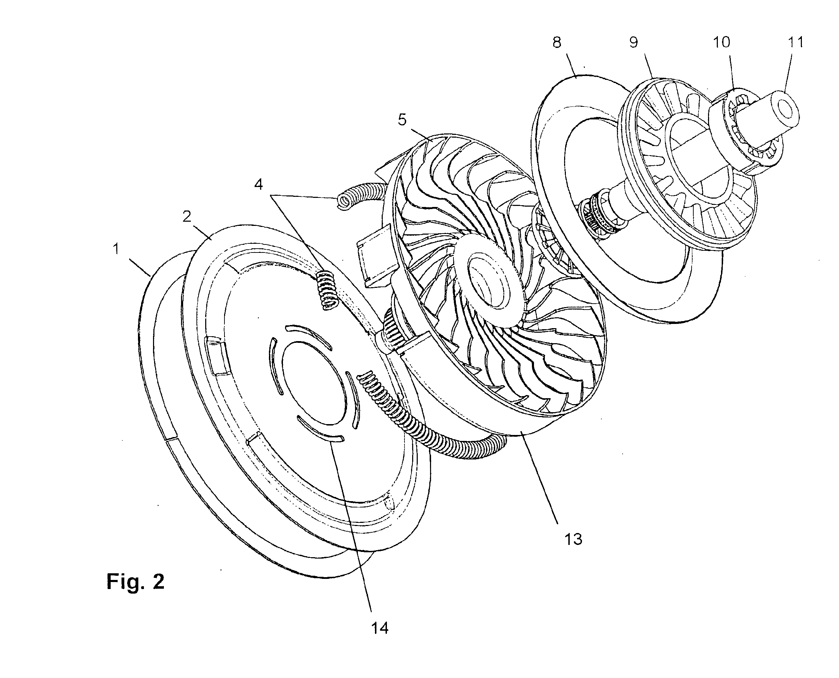

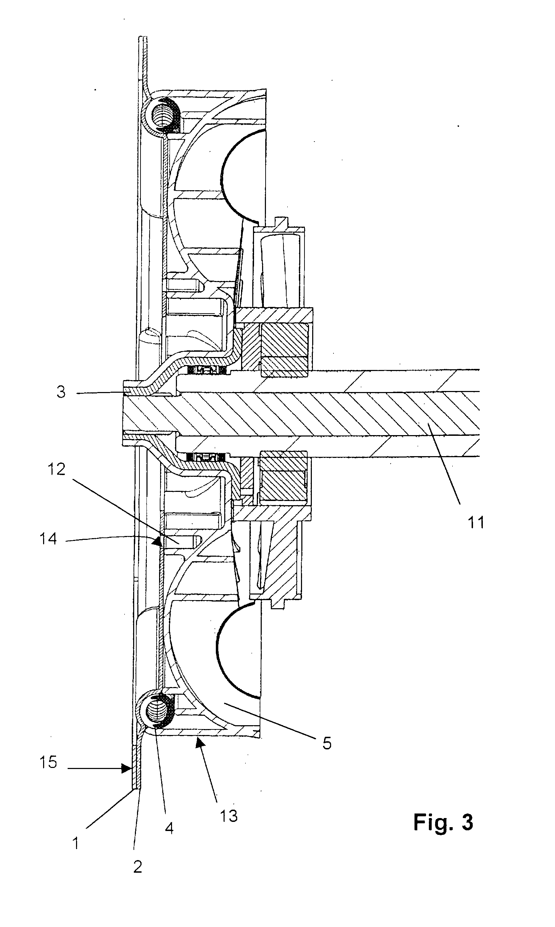

In den Figuren 1 und 2 sind die für die vorliegende Erfindung wesentlichen Teile eines Drehmomentwandlers in einer Explosionsansicht von vorne (vom Verbrennungsmotor her gesehen) beziehungsweise hinten dargestellt. Figur 3 zeigt einen Querschnitt entlang der Längsachse des Drehmomentwandlers mit den Teilen der Figuren 1 und 2 im zusammengesetzten Zustand.

In den Figuren 1 bis 3 ist das Turbinenrad 5 erkennbar, welches drehfest mit einer Welle 11 gekoppelt ist. Ein vom Turbinenrad 5 aufgenommenes Drehmoment kann somit auf die Welle 11 übertragen werden. Das Turbinenrad 5 ist vorzugsweise im Druckgussverfahren aus einer speziellen Aluminiumlegierung hergestellt. Es kann durch ein hydraulisches Medium wie insbesondere Öl in Drehung versetzt werden, welches im Wandler in an sich bekannter Art in einem Kreislauf gefördert wird. Der Kreislauf des Mediums verläuft dabei über die Schaufeln des Turbinenrades 5, über die Schaufeln des Pumpenrades (nicht dargestellt), das mit dem durch den Verbrennungsmotor in Rotation versetzten Wandlergehäuse (nicht dargestellt) verbunden ist, und über ein Leitrad 9, das auf einem Freilauf 10 sitzt, zurück zum Turbinenrad 5. Die über das Hydraulikmedium stattfindende Drehmomentübertragung vom Pumpenrad auf das Turbinenrad hat den Vorteil, dass eine weichere Drehmomentübertragung erreicht und ein Anfahren ohne Kupplung möglich wird. Hydrodynamische Drehmomentwandler werden daher in der Regel in Verbindung mit Automatikgetrieben eingesetzt.

Wenn eine etwa gleiche Drehzahl zwischen Pumpenrad und Turbinenrad 5 erreicht ist, wird vorzugsweise eine Überbrückungskupplung eingeschaltet, welche parallel zur hydrodynamischen Kopplung wirkt und über Reibflächen eine mechanische Verbindung zwischen dem Turbinenrad 5 und dem Wandlergehäuse herstellt. Bei den in den Figuren 1 bis 3 dargestellten Drehmomentwandler wird die Überbrückungskupplung durch einen Reibring 1 hergestellt, welcher an einem Kopplungselement 2 umfänglich befestigt ist. Durch eine entsprechende Axialverschiebung (in Figur 1 nach links) kann der Reibring 1 in Reibkontakt mit einer korrespondierenden Reibfläche am Wandlergehäuse treten und hierüber eine drehfeste Kopplung zwischen dem Wandlergehäuse und dem Kopplungselement 2 herstellen.

Das Kopplungselement 2 ist mit umfänglich verlaufenden Langlöchern 14 versehen, durch welche es an entsprechend verlaufenden Befestigungskanälen 12 befestigt werden kann, welche axial von der Rückseite des Turbinenrades 5 abstehen. Durch eine geeignete Befestigung kann somit eine auf einen bestimmten Winkelbereich begrenzte radiale Relativverdrehung zwischen Kopplungselement 2 und Turbinenrad 5 gewährleistet werden.

Die Drehmomentübertragung zwischen Kopplungselement 2 und Turbinenrad 5 findet über Federelemente 4 statt, welche umfänglich verlaufend in Aufnahmenocken 13 am Rand der Außenschale des Turbinenrades 5 angeordnet sind. Die Spiralfedern 4 können dabei durch Umlegen der oberen, durch Schlitze begrenzten Kanten der Aufnahmenocken 13 fixiert werden. Dadurch, dass diese Schwingungsdämpfungsfedern 4 sich mit einem ihrer Enden am Turbinenrad 5 und mit dem anderen Ende in einer entsprechenden Tasche des Kopplungselementes 2 abstützen, sind sie seriell in den Weg der Kraftübertragung vom Kopplungselement 2 auf das Turbinenrad 5 eingeschaltet. Die Schwingungsdämpfungsfedern 4 können somit Drehmomentschwankungen und Drehmomentspitzen bei der Übertragung auf das Turbinenrad 5 herausfiltern.

Um zur Herstellung einer Überbrückungskupplung die Reibfläche 15 des Reibringes 1 mit der entsprechenden Reibfläche am Wandlergehäuse (nicht dargestellt) in Kontakt bringen zu können, ist das Turbinenrad 5 axial verschiebebeweglich auf der Welle 11 gelagert. Die drehfeste Verbindung zwischen Welle 11 und Turbinenrad 5 bei gleichzeitiger axialer Verschiebebeweglichkeit wird durch eine entsprechende Verzahnung erreicht. Das Turbinenrad 5 kann daher zusammen mit dem hieran befestigten Kopplungselement 2, das den Reibring 1 trägt, in Achsrichtung zum Wandlergehäuse hin verschoben werden (nach links in den Figuren 1 und 3). Bei einer solchen axialen Verschiebung des Turbinenrades 5 entsteht ein gewisser Abstand des Turbinenrades vom Pumpenrad und hierdurch eventuell ein hydraulischer Schlupf. Dieser ist jedoch für die Funktion des Drehmomentwandlers unerheblich, da in diesem Zustand die Überbrückungskupplung geschlossen ist und die hydrodynamische Kopplung keine Rolle mehr spielt.

In Figur 3 ist ferner eine am Ende der Welle 11 befindliche Nabe 3 erkennbar, die mit dem Turbinenrad 5 drehfest gekoppelt ist. Sie bietet ausreichende Drehmomentfestigkeit und auf zwei Laufflächen eine axiale und eine radiale Lagerung.

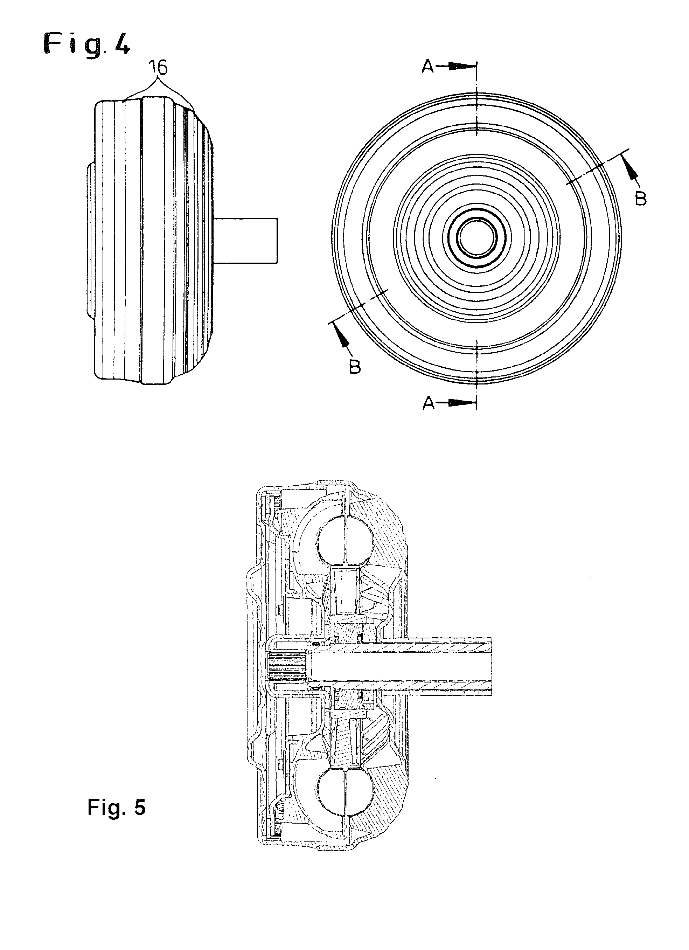

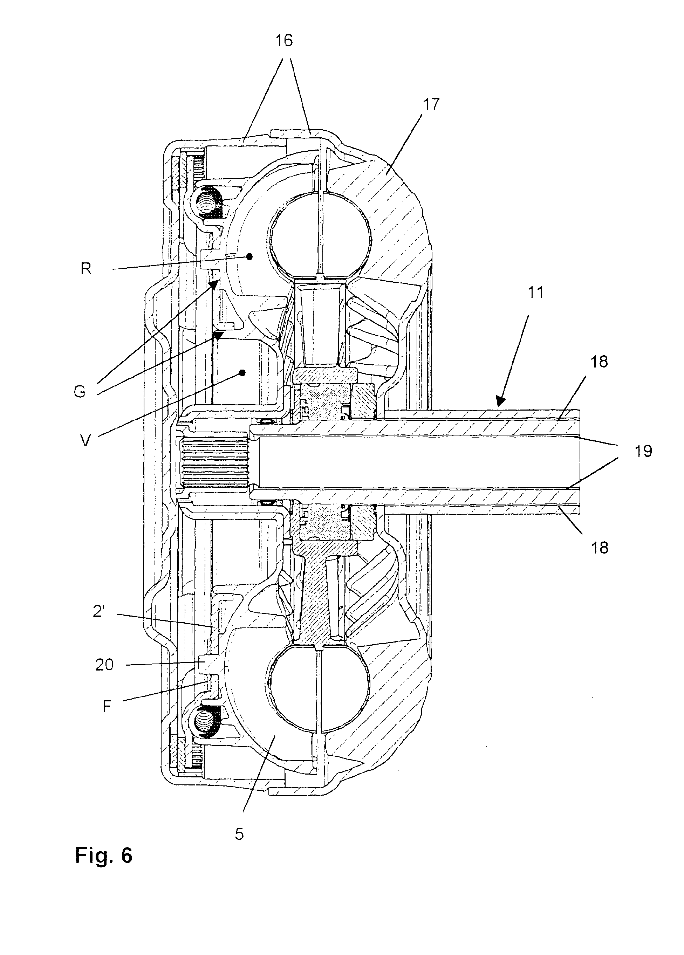

In den Figuren 4, 5 und 6 ist eine zweite Ausführungsform des Drehmomentwandlers dargestellt. Figur 4 zeigt dabei eine Seitenansicht und eine Aufsicht auf die Stirnseite des geschlossenen Wandlergehäuses 16. Figur 5 zeigt einen Schnitt durch diesen Drehmomentwandler entlang der Linie B-B aus Figur 4, und Figur 6 zeigt einen entsprechenden Schnitt entlang der Linie A-A. Gleiche Elemente wie bei der Ausführungsform nach den Figuren 1 bis 3 sind in den Figuren 4 bis 6 mit denselben Bezugszeichen gekennzeichnet. In den Figuren ist auch das Wandlergehäuse 16 mit dem daran befestigten Pumpenrad 17 dargestellt.

Der wesentliche Unterschied zwischen der Ausführungsformen nach den Figuren 4 bis 6 beziehungsweise 1 bis 3 besteht in der Befestigung des Kopplungselementes 2 beziehungsweise 2'. Das Kopplungselement 2' der zweiten Ausführungsform ist mit Langlöchern versehen, welche in Umfangsrichtung verlaufen und durch welche ein Zapfen 20 ragt, welcher an der dem Wandlergehäuse zugewandten Außenschale des Turbinenrades 5 ausgebildet ist und von dort axial absteht. Auf dem durchtretenden Ende des Zapfens 20 sitzt ein Federring F, welcher das Kopplungselement 2' mit einstellbarem Druck gegen das Turbinenrad 5 drückt. Zwischen dem Kopplungselement 2' und dem Turbinenrad 5 sind axiale und radiale Gleitflächen G ausgebildet. Durch den Federring F wird das Kopplungselement 2' mit definiertem Druck gegen diese Gleitflächen G gepresst, so dass an diesen Flächen eine ausreichende Abdichtung entsteht. Da das Turbinenrad 5 vorzugsweise aus einer Aluminiumlegierung und das Kopplungselement 2' vorzugsweise aus Stahl besteht, besitzen die Gleitflächen G gute Gleiteigenschaften und ein konstantes Langzeitverhalten. Durch die an den Gleitflächen G auftretende Reibung wird gleichzeitig das Dämpfungsverhalten des Torsionsdämpfers mitbestimmt, da es bei einer Kompression der Federn 4 zwangsläufig zu einer Relativbewegung entlang der Gleitflächen G kommt.

Die zum Einschalten der Überbrückungskupplung notwendige axiale Verschiebung des Turbinenrades 5 kann über eine entsprechende Beaufschlagung der beiden in verschiedene axiale Richtungen zeigenden Seiten des Turbinenrades 5 erfolgen. Zu diesem Zweck sind in der Welle 11 Kanäle 19 vorgesehen, über welche Druckmedium in den vorderen Raum V zwischen Turbinenrad 5 und Wandlergehäuse geleitet werden kann. Ebenso sind Kanäle 18 in der Welle vorgesehen, über die Druckmedium in den auf der abgewandten Rückseite des Turbinenrades gelegenen Raum R geleitet werden kann. Ein in dem vorderen Raum V herrschender Überdruck im Vergleich zum rückwärtigen Raum R bewirkt einen axialen Druck vom Wandlergehäuse weg. Hierdurch wird die Überbrückungskupplung geöffnet. Umgekehrt bewirkt ein Unterdruck in diesem Raum V gegenüber dem Rückseitenraum R, dass sich das Turbinenrad 5 in axialer Richtung auf das Wandlergehäuse zu bewegt und es hierdurch zu einem Kontakt der Reibflächen und damit einem Schließen der Überbrückungskupplung kommt.

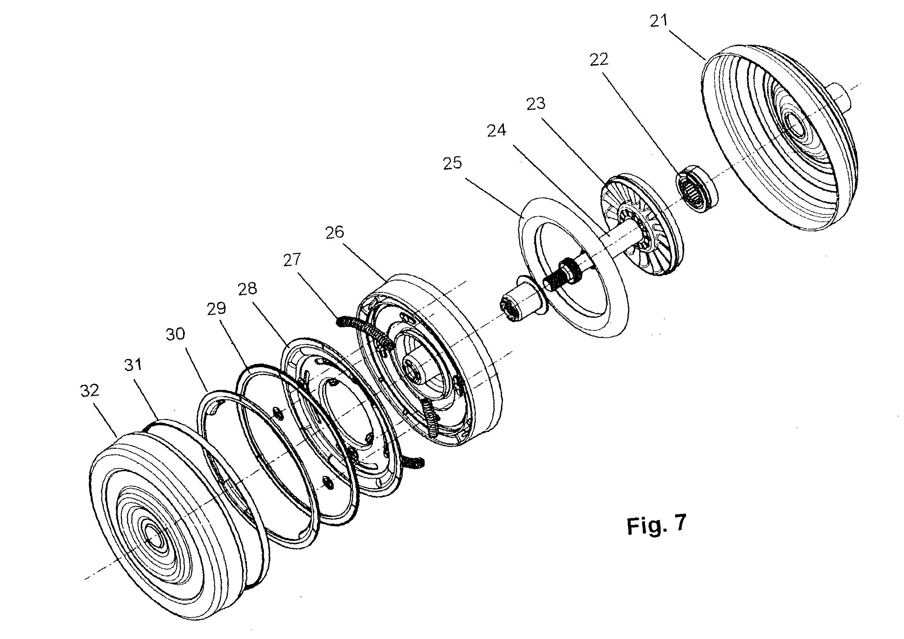

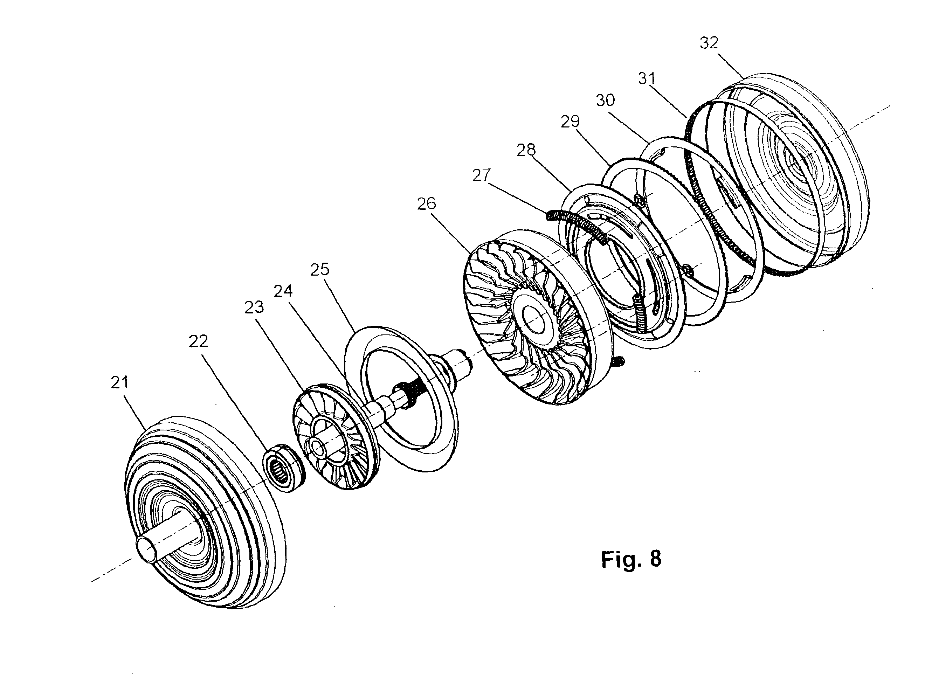

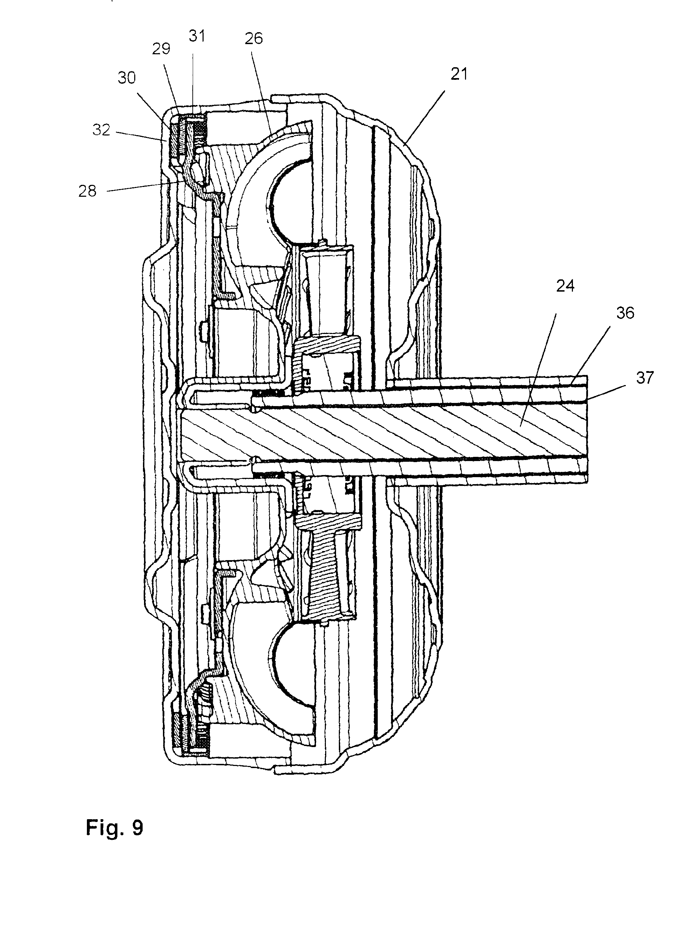

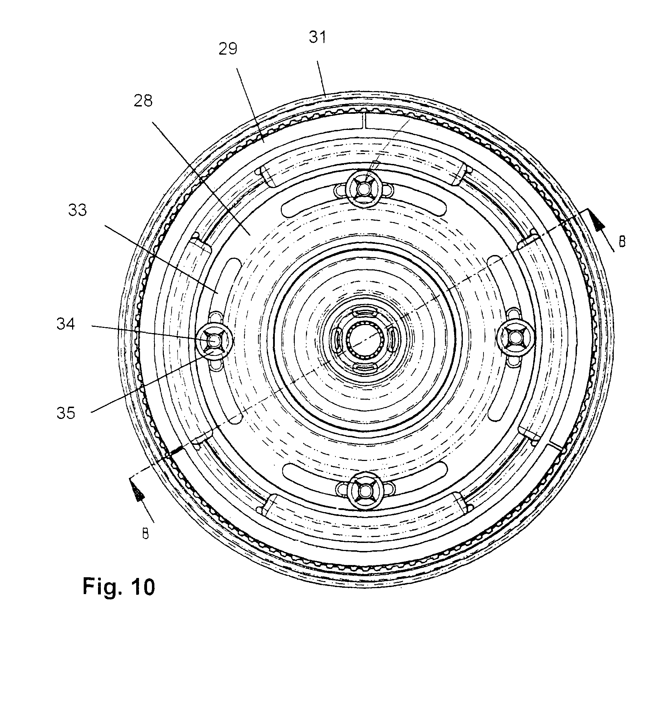

In den Figuren 7 bis 10 ist eine dritte Ausführungsform des Drehmomentwandlers dargestellt. Die Figuren 7 und 8 zeigen dabei eine perspektivische Explosionsansicht des Drehmomentwandlers von der Vorderseite beziehungsweise der Rückseite her. Figur 9 zeigt einen Querschnitt durch den zusammengesetzten Drehmomentwandler und Figur 10 eine Aufsicht auf das Kopplungselement. Bei dieser Ausführungsform besteht der Reibring aus drei Teilelementen 29, 30, 31.

In Figur 9 sind zwei Kanäle 36 und 37 erkennbar, welche sich parallel zur Achse durch die Welle 24 erstrecken. Der Kanal 37 führt in den Raum zwischen Kopplungselement 28 und Wandlergehäuse 32, während der andere Kanal 36 in den Raum führt, in welchem sich die Turbinenblätter befinden. Die beiden genannten Räume sind durch das Turbinenrad 26 und das abgedichtet mit dem Turbinenrad verbundene Kopplungselement 28 im Wesentlichen voneinander isoliert. Über den Kanal 37 kann daher ein Druckmedium wie insbesondere Öl in den Raum zwischen Kopplungselement 28 und Wandlergehäuse 32 eingeleitet werden, um dort einen höheren Druck aufzubauen als im anderen Raum. Das Turbinenrad 26 und das Kopplungselement 28 werden daher in axialer Richtung vom Wandlergehäuse weg (in Figur 9 nach rechts) gedrückt, so dass die Reibflächen von Reibring und Wandlergehäuse auseinander gedrückt werden. Die Überbrückungskupplung wird dabei geöffnet. Wenn dagegen über den Kanal 37 der Druck des zugeführten Mediums verringert wird und es in der Folge zu einem geringeren Druck im Raum zwischen Kopplungselement 28 und Wandlergehäuse 32 kommt als im Turbinenraum, wird das Turbinenrad 26 vom höheren Druck im Turbinenraum in axialer Richtung auf das Wandlergehäuse zu bewegt (in Figur 9 nach links). Hierdurch kommt es zu einem Kontakt der Reibflächen, das heißt zu einem Schließen der Überbrückungskupplung.

In der Aufsicht von Figur 10 auf das Kopplungselement 28 sind die Langlöcher 33 und die durchtretenden Zapfen 34 gut erkennbar, wobei auf den Zapfen Federringe 35 zur Erzeugung eines Anpressdrucks aufgesetzt sind.

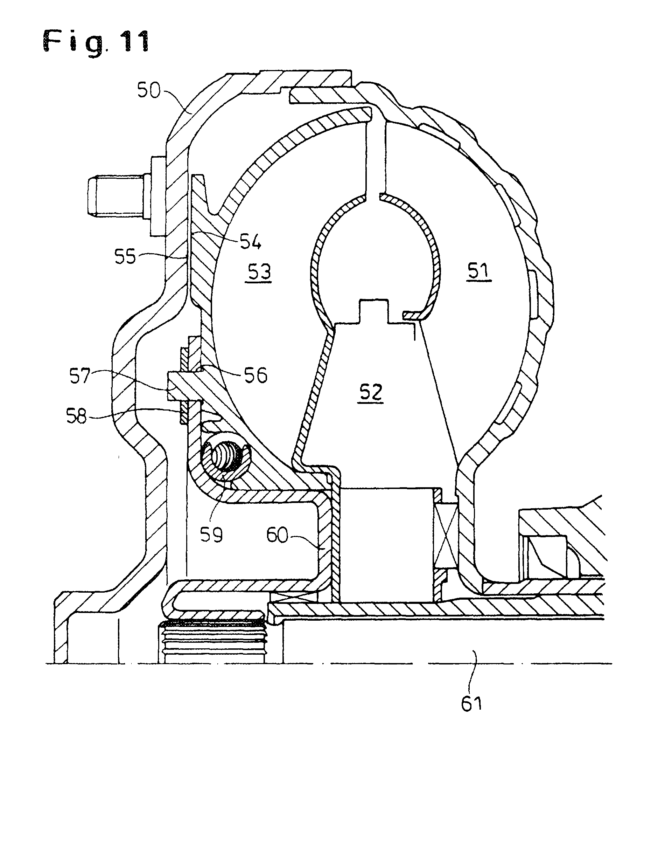

In Figur 11 ist eine vierte Ausführungsform des Drehmomentwandlers im Querschnitt dargestellt. Zu erkennen ist das Wandlergehäuse 50, das mit dem Wandlergehäuse 50 verbundene Pumpenrad 51, das Leitrad 52 und das Turbinenrad 53. Die Schaufeln von Pumpenrad 51, Leitrad 52 und Turbinenrad 53 bilden einen geschlossenen hydrodynamischen Kreis, in welchem umlaufendes Öl eine Kopplung zwischen dem Pumpenrad 51 und dem Turbinenrad 53 herstellt.

Das Turbinenrad 53 weist an seiner dem Wandlergehäuse 50 zugewandten Außenschale eine Reibfläche 54 auf, der eine korrespondierende Reibfläche 55 am Wandlergehäuse 50 axial beabstandet gegenübersteht. Durch eine axiale Verschiebung des Turbinenrades 53 zum Wandlergehäuse 50 hin (in Figur 11 nach links) können die beiden Reibflächen 54 und 55 in Kontakt treten und somit eine kraftschlüssige Verbindung zwischen Wandlergehäuse 50 und Turbinenrad 53 herstellen. In diesem Zustand ist die Überbrückungskupplung des Drehmomentwandlers geschlossen. Die direkte Kopplung von Turbinenrad 53 und Wandlergehäuse 50 wird dadurch ermöglicht, dass das Turbinenrad 53 axial verschiebebeweglich gelagert ist.

Die Anbindung des Turbinenrades 53 an die Welle 61 erfolgt über ein Kopplungselement 60. Das Kopplungselement 60 ist mit einem Ende drehfest auf der Welle 61 angeordnet. Das radial nach außen stehende andere Ende weist in Umfangsrichtung verlaufende Langlöcher 56 auf, durch welche axial von der Außenschale des Turbinenrades 53 abstehende Zapfen 57 hindurchtreten. Die Zapfen 57 werden nach ihrem Durchtritt durch einen Federteller 58 fixiert, welcher das Kopplungselement 60 mit definiertem Druck gegen das Turbinenrad 53 presst. Hierdurch werden die Gleitflächen zwischen Kopplungselement 60 und Turbinenrad 53 dichtend in Kontakt gebracht.

In einer ebenfalls an der Außenschale des Turbinenrades 53 angeordneten Aufnahmenut befindet sich eine Spiralfeder 59. Vorzugsweise sind über den Umfang gleichmäßig verteilt mehrere solcher Spiralfedern vorhanden. Die Spiralfeder 59 ist mit einem Ende am Turbinenrad 53 abgestützt, während das andere Ende sich am Kopplungselement 60 abstützt. Auf diese Weise ist die Feder 59 in den Kraftübertragungsweg vom Turbinenrad 53 zum Kopplungselement 60 seriell eingebunden, so dass sie Drehmomentspitzen dämpfen kann.

Anders als bei den zuvor beschriebenen Ausführungsformen des Drehmomentwandlers ist der durch die Feder 59 gebildete Torsionsdämpfer somit in dem Verbindungsweg zwischen Turbinenrad 53 und Welle 61 angeordnet, so dass er alle Drehmomentspitzen erfasst unabhängig davon, ob sie über die Überbrückungskupplung oder die hydrodynamische Kopplung auf das Turbinenrad übertragen wurden.

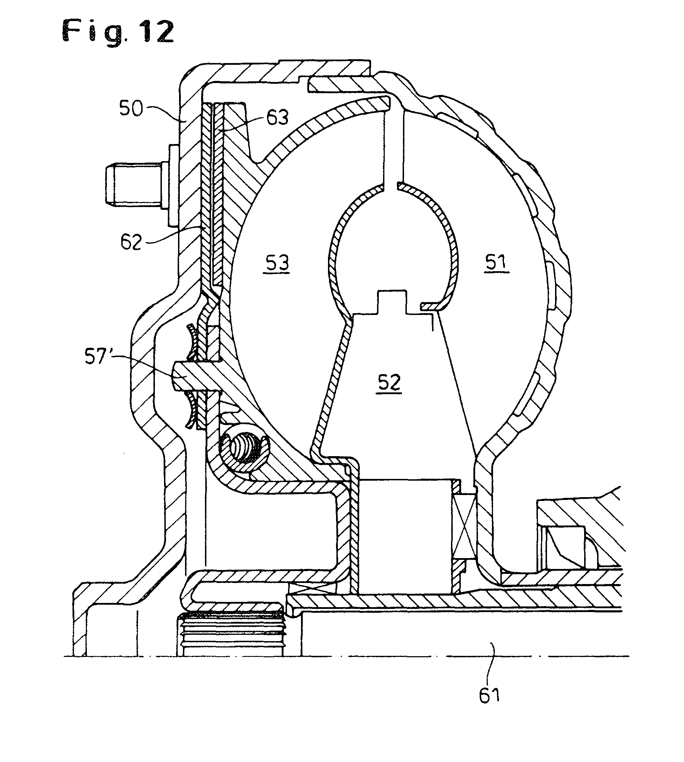

Figur 12 zeigt eine ähnliche Ausführungsform des Drehmomentwandlers wie Figur 11, wobei jedoch auf dem Zapfen 57', der axial abstehend an der Außenschale des Turbinenrades 53 angeordnet ist, ein weiteres Ringelement 62 befestigt ist. Dieses erstreckt sich in den Spalt zwischen den Reibflächen am Wandlergehäuse und an der Außenschale des Turbinenrades.

Die Reibflächen am Wandlergehäuse einerseits und an der Außenschale des Turbinenrades andererseits können zur Erzeugung eines gewünschten Reibungsverhaltens besonders ausgestaltet sein. So können sie zum Beispiel aus Aluminium und/oder aus Stahl bestehen. Insbesondere kann das Ringelement 62 aus Aluminium und die zum Turbinenrad gelegene Reibfläche 63 aus Stahl bestehen. Aluminiumflächen können mit spiralförmigen Ölrinnen versehen sein. Ebenso kann Aluminium mit keramischem Material kombiniert sein. Schließlich ist es auch möglich, in üblicher Weise die Reibungsflächen mit Reibpapier zu beschichten, welches auf eine der Oberflächen aufgeleimt wird.

Die in den Torsionsdämpfern verwendeten Federn erfüllen mehrere Funktionen. Zum einen isolieren und dämpfen sie die Torsionsvibrationen, die vom Verbrennungsmotor kommen. Zum anderen reduzieren und dämpfen sie anfängliche Vibrationen von Turbinenrad und Pumpenrad. Schließlich fangen sie Eingriffsstöße bei Getriebeschaltvorgängen und bei Eingreifen der Überbrückungskupplung ab.

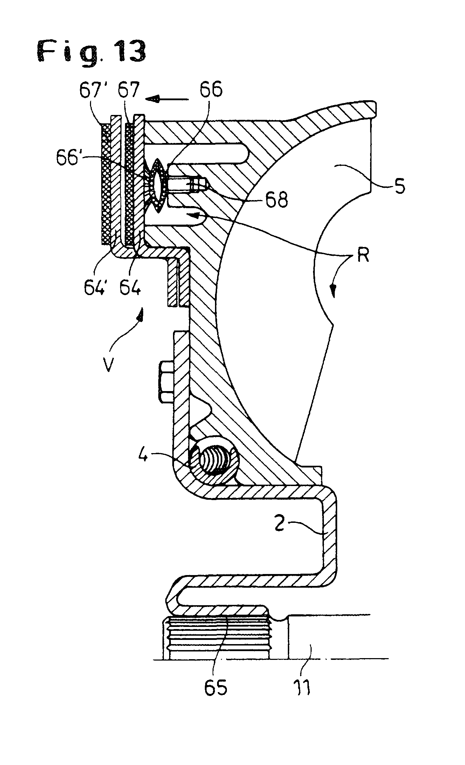

In Fig. 13 ist eine weitere Ausführungsform der Erfindung schematisch dargestellt, die insbesondere für Drehmomentwandler geeignet ist, bei denen nur ein relativ geringer Hydraulikdruck zur Umsteuerung der Überbrückungskupplung zur Verfügung steht. Bei relativ niedrigen zur Verfügung stehenden Hydraulikdrücken kann das Problem auftreten, dass die Hydraulikkräfte nicht ausreichen, das Turbinenrad 5 axial auf der Welle zu verschieben, solange über die zwischen Turbinenrad 5 und Welle 11 befindliche Verzahnung 65 ein hohes Drehmoment übertragen wird, da eine axiale Verschiebung des Turbinenrades entlang der Verzahnung 65 durch die Seitenkräfte auf diese Verzahnung erschwert wird. Um die Verzahnung 65 zunächst zu entlasten, ist bei der in Fig. 13 dargestellten Ausführungsform im äußeren Bereich des Turbinenrades ein separater, in der Fig. 13 in zwei Stellungen dargestellter Kolben 64 bzw. 64' vorgesehen, der eine Reibfläche 67 bzw. 67' gegen eine entsprechende (in Fig. 13 nicht dargestellte) Reibfläche des Wandlergehäuses andrücken kann. Der ringförmige Kolben 64 ist über (nicht dargestellte) Führungseinrichtungen, z.B. Bolzen drehfest, jedoch axial verschiebbar gegenüber dem Turbinenrad gelagert. Der Kolben 64 wird von dem dem Turbinenrad 5 zugewandten Raum R mit dem dort jeweils herrschenden Hydraulikdruck beaufschlagt und dichtet den Raum R gegenüber dem im Bereich des Wandlergehäuses befindlichen Raum V hydraulisch ab. Der Ankupplungsvorgang spielt sich wie folgt ab: Zunächst befindet sich der Kolben in einem mit den Bezugszeichen 64 bzw. 67 angedeuteten Zustand. Der Druck des Hydraulikmediums in dem Raum R wird im Vergleich zu dem Druck in dem Raum V erhöht. Schon bei einem relativ geringen Druck bewegt sich der Kolben 64 in die mit einem Pfeil angedeutete Richtung und drückt die Reibfläche gegen die (nicht dargestellte) Reibfläche des Gehäuses, so dass der Kolben bzw. die Reibfläche die mit 64' bzw. 67' bezeichnete Stellung einnehmen. Dadurch wird zumindest ein Teil des Drehmoments zwischen dem Turbinenrad 5 und dem Wandlergehäuse bereits über diese Reibungsverbindung übertragen, wodurch die Verzahnung 65 entlastet wird, so dass eine axiale Verschiebebewegung des Turbinenrads erleichtert wird. Dadurch kann sich schließlich das gesamte Turbinenrad entsprechend dem Druckgefälle axial in Richtung Gehäuse verschieben, bis sämtliche Reibflächen gegeneinander anliegen und der Ankupplungsvorgang vollständig abgeschlossen ist. Die Bewegung des Kolbens 64 kann durch eine in zwei Positionen gezeigte, in einer Halterung 68 an dem Turbinenrad befestigte Schnappfeder 66 bzw. 66' unterstützt werden, durch die der Kolben 64 in seine jeweiligen Endstellungen gezwungen wird.

Beim Betrieb des Drehmomentwandlers sind folgende Zustände zu unterscheiden:
a) Motorstart und Leerlauf: Die Kurbelwelle dreht den Drehmomentwandler und die Pumpe, und die Ölpumpe füllt den Wandler. Der Druck im Raum zwischen Wandlergehäuse und Turbinenrad ist höher als im restlichen Wandlergehäuse. Der Öldruckunterschied bewegt das Turbinenrad und die Überbrückungskupplung und trennt die Reibflächen von dem Wandlergehäuse. Aufgrund eines geringen Drehzahlunterschiedes zwischen dem Turbinenrad und dem Pumpenrad besteht nahezu kein Drehmomenttransfer auf die Welle.
b) Mit steigender Motordrehzahl und sich verringernder Drehzahldifferenz zwischen Turbinenrad und Pumpenrad, was zu einer niedrigeren Ölzirkulation führt, steigt die Effizienz der Drehmomentwandlung.
c) In Abhängigkeit vom Fahrmodus und den Befehlen der zentralen Steuerung unterbricht das Überbrückungsventil oder die Spule die Zufuhr von Öl zum Raum zwischen Wandlergehäuse und Turbinenrad, und der Druck in diesem Raum fällt ab. Das Turbinenrad bewegt sich daraufhin wieder in Richtung des Wandlergehäuses. Hierdurch kommen die Reibflächen am Kopplungselement und am Wandlergehäuse in Kontakt, so dass eine direkte Kopplung zwischen Motor und Welle erreicht wird.
d) Da die Reibungsflächen nur indirekt über die Federn mit der Welle verbunden sind, wird Stoßenergie von den Federn und von der Reibung zwischen den Stahlplatten und der Turbine aufgenommen.

Der erfindungsgemäße Drehmomentwandler kann insbesondere für Motoren mit hoher Vibration eingesetzt werden. Da diese Motoren in kleineren Fahrzeugen verwendet werden, muss der Raumbedarf für die Kraftübertragung auf ein absolutes Minimum begrenzt sein.

## Patentansprüche

1. Hydrodynamischer Drehmomentwandler, enthaltend
a) ein um eine Welle (11; 24; 61) drehbares Wandlergehäuse (16; 21, 32; 50), das mit einem Antrieb und mit einem Pumpenrad (17; 51) verbunden ist,
b) ein relativ zum Wandlergehäuse drehbar gelagertes Turbinenrad (5; 26; 53), das mit der Welle und hydrodynamisch mit dem Pumpenrad gekoppelt ist,
c) eine Überbrückungskupplung zur Herstellung einer Reibungskopplung zwischen einer mit dem Wandlergehäuse in Verbindung stehenden Reibfläche (55) und einer mit dem Turbinenrad in Verbindung stehenden Reibfläche (15; 54),
**dadurch gekennzeichnet, dass** das Turbinenrad axial verschiebebeweglich gelagert ist, und dass durch eine axiale Verschiebung des Turbinenrades die genannten Reibflächen (15; 54, 55) in Kontakt gebracht werden können.

2. Drehmomentwandler nach Anspruch 1,
**dadurch gekennzeichnet, dass** dieser einen Torsionsdämpfer enthält, welcher Drehmomentstöße zwischen dem Antrieb und der Welle (11; 24; 61) dämpft.

3. Drehmomentwandler nach Anspruch 2, **dadurch gekennzeichnet, dass** der Torsionsdämpfer in der Verbindung zwischen dem Turbinenrad (5; 26) und der zugehörigen Reibfläche (15) angeordnet ist oder dass der Torsionsdämpfer in der Verbindung zwischen dem Turbinenrad (53) und der Welle (61) angeordnet ist.

4. Drehmomentwandler nach Anspruch 2 oder 3, **dadurch gekennzeichnet, dass** der Torsionsdämpfer mindestens eine an der Außenschale des Turbinenrades (5; 26; 53) gelagerte, umfänglich verlaufende Feder (4; 27; 59) enthält, deren eines Ende an dem Turbinenrad und deren anderes Ende an einem relativ zum Turbinenrad drehbaren Kopplungselement (2; 2'; 28; 60) abgestützt ist.

5. Drehmomentwandler nach Anspruch 4, **dadurch gekennzeichnet, dass** das Kopplungselement (28; 60) mindestens ein umfänglich verlaufendes Langloch (33; 56) aufweist, durch welches ein von der Außenschale des Turbinenrades (26; 53) axial abstehender Zapfen (34; 57) greift, wobei der Durchgriff des Zapfens (34; 57) vorzugsweise durch das Langloch (33; 56) abgedichtet ist.

6. Drehmomentwandler nach Anspruch 4 oder 5, **dadurch gekennzeichnet, dass** die mit dem Turbinenrad (5; 26) in Verbindung stehende Reibfläche (15) am Kopplungselement (2; 2'; 28) ausgebildet ist.

7. Drehmomentwandler nach mindestens einem der Ansprüche 1 bis 6, **dadurch gekennzeichnet, dass** die mit dem Turbinenrad (53) in Verbindung stehende Reibfläche (54) an der Außenschale des Turbinenrades ausgebildet ist und/oder dass mindestens eine der Reibflächen (15; 62) aus einer Aluminiumgusslegierung und/oder Stahl hergestellt ist.

8. Drehmomentwandler nach mindestens einem der Ansprüche 1 bis 11, **dadurch gekennzeichnet, dass** mindestens eine der Reibflächen Ölflusskanäle aufweist.

9. Drehmomentwandler nach mindestens einem der Ansprüche 1 bis 8, **dadurch gekennzeichnet, dass** Kanäle (18, 19; 36, 37) für ein Druckmedium derart vorgesehen sind, dass zwischen den auf verschiedenen axialen Seiten des Turbinenrades (5; 26) gelegenen Räumen (V, R) wahlweise eine Druckdifferenz eingestellt werden kann.

10. Drehmomentwandler nach mindestens einem der Ansprüche 1 bis 9, **dadurch gekennzeichnet, dass** die Schaufeln und die Außenschale des Turbinenrades (5) als einteiliges Gussstück ausgebildet sind.

11. Drehmomentwandler nach mindestens einem der Ansprüche 4 bis 10, **dadurch gekennzeichnet, dass** die Außenschale des Turbinenrades (5) und die außenseitig angeordneten Nocken (13) zum Halten der Feder (4; 27; 59) als einteiliges Gussstück ausgebildet sind, wobei die Feder (4; 27; 59) vorzugsweise durch Abkippen oder Bördeln wenigstens von Abschnitten des äußeren Randes des Mantels der Nocken (13) zum Zentrum des Turbinenrades (5) hin axial gehalten wird.

12. Drehmomentwandler nach mindestens einem der Ansprüche 4 bis 11, **dadurch gekennzeichnet, dass** dem Turbinenrad (5) oder dem Kopplungselement wenigstens eine Kolbeneinrichtung zugeordnet ist, die in ihrer Wirkposition eine Reibungskopplung mit dem Wandlergehäuse zugeordneten Reibflächen herstellt, wobei vorzugsweise die wenigstens eine Kolbeneinrichtung im äußeren Umfangsbereich des Turbinenrades (5) angeordnet ist und einen parallel zur Achse des Wandlers geführten, beweglichen Kolben (64) aufweist, der von dem dem Turbinenrad (5) zugewandten Raum (R) mit hydraulischem Druckmedium versorgt wird, gegenüber dem dem Turbinenrad abgewandten Raum (V) abgedichtet ist und eine Reibfläche (67) aufweist, die in Kontakt mit wenigstens einer an dem Wandlergehäuse vorgesehenen Reibfläche bringbar ist.

13. Drehmomentwandler nach Anspruch 12, **dadurch gekennzeichnet, dass** die Kolbeneinrichtung eine Schnappfeder (66) aufweist, durch die der Kolben (64) bei der Bewegung in seine jeweiligen Endstellungen unterstützt wird.

14. Drehmomentwandler nach Anspruch 12 oder 13, **dadurch gekennzeichnet, dass** dieser zur Ausbildung einer Reibungskopplung derart ausgebildet ist, dass bei Einstellung eines Überdrucks zwischen dem dem Turbinenrad zugewandten Raum (R) gegenüber dem dem Turbinenrad abgewandten Raum (V) durch Wirkung der Kolbeneinrichtung wenigstens ein Teil des Drehmoments zwischen dem Turbinenrad (5) und dem Wandlergehäuse übertragen wird, wodurch das zwischen der Welle (11), auf der das Turbinenrad axial verschiebebeweglich gelagert ist, und dem Turbinenrad (5) wirkende Drehmoment reduziert wird, so dass die axiale Verschiebebewegung des Turbinenrades gegenüber der Welle zur Herstellung einer vollständigen Reibungskopplung erleichtert wird.
